Europäisches Patentamt

European Patent Office

Office européen des brevets

(19)

(11) Publication number: **0 323 385**
A1

# EUROPEAN PATENT APPLICATION

(12)

(21) Application number: **88500128.9**

(22) Date of filing: **28.12.88**

(51) Int. Cl.4: **B 65 G 13/06**

(30) Priority: 31.12.87 ES 8703784
22.11.88 ES 8803568

(43) Date of publication of application:
**05.07.89 Bulletin 89/27**

(84) Designated Contracting States:
**CH DE FR GB IT LI**

(71) Applicant: **FAGOR SISTEMAS, S.COOP. LTDA.**
**B. San Andrés, s/n**
**E-20500 Mondragon (Guipuzcoa) (ES)**

(72) Inventor: **Calvo Poza, Francisco Javier**
**c/ Pintor Pablo Uranga 1-4 Izqda.**
**E-01008 Vitoria (Alava) (ES)**

(74) Representative: **Herrero Antolin, Julio**
**HERRERO & ASOCIADOS, S.L. Alcalá, 21**
**E-28014 Madrid (ES)**

(54) **Free flow drive system for pallets.**

(57) The system is based on the use of two sets of roller bearings (2) and (3) with a small axial counter, which form two longitudinal and marginal rows in the drive line, roller bearings (2) being motorised and assembled on shafts (6), whereas roller bearings (3) are assembled with freedom of rotation on corresponding shafts (5). All the drive roller bearings receive movement through a chain (8).

Each drive roller bearing (2) is provided with a series of axial lips (14) through which it is adapted to shaft (6), which lips are provided with metal rings (15) which press them against such shaft (6) forming a clutch device which determines drive transmission from the shaft to the roller bearing up to a specific torque, such torque having been exceeded, and due to the effect of the holding means of pallets (4), the roller bearings stop while their shafts (6) continue to rotate.

FIG.-1

EP 0 323 385 A1

**Description**

## FREE FLOW DRIVE SYSTEM FOR PALLETS

### OBJECT OF THE INVENTION

The present invention relates to a free flow drive or transport system for pallets, i.e., a system which allows such pallets to run freely and individually, wherefore they may be stored between two work stations, in order that the temporary stoppage in a work station will not cause the stoppage of the whole installation.

The drive system of the invention is therefore particularly useful in assembling machines, i.e., machines destined to fit the components of any apparatus or to handle such components, in which machines are established several job positions wherein several operations are performed, either by hand or using programmed manipulators, which job positions are related through a drive system which allows pallets carrying the parts to go from one job position to the next.

### BACKGROUND OF THE INVENTION

Known machines of this type have to date used conveyor belts or chains of different types as a drive system for pallets, on which belts the pallets are placed and whereon they are transported at a speed determined by the driving means of the belt itself. When a pallet comes up against an abutment or any other obstacle, such pallet stops whilst the belt or chain continues its progress, i.e., it continues to move grating the base of such pallet while it carries the other free pallets.

The disadvantages of these systems may be deduced from the foregoing, and essentially consist in the fact that when a pallet is held by any means, a strong friction is produced against the conveyor belt or chain which causes a considerable wear in the latter and consequently has a negative and considerable effect in the useful life thereof.

Other equally important problems are further derived from such systems, such as the fact that as the belt or chain is a continuous element the locking devices of the pallets may not be placed, at each job position, on the drive line. On the other hand, the conveyor belt or the locking device usually occupies almost the whole width of the sliding area of the pallets and it is therefore impossible to gain access thereto through their lower area.

### DESRIPTION OF THE INVENTION

The drive system of the invention fully solves all the previously mentioned problems.

More specifically, when a pallet stops, friction between the drive elements and the pallet is practically eliminated. On the other hand there is more than enough space between the drive elements, on the line itself, to place the locking devices of the pallets or any other complementary mechanism needed for the correct operation of the machine. Finally, the central part of the transport line is completely clear such that the pallet is directly accessible from below, and it is therefore possible to perform other operations which would otherwise require more complex mechanisms or handlings of the pallet outside the line.

More specifically and in order to achieve the above, the drive system of the invention is based on the use of a series of roller bearings with a small axial counter, assembled in pairs in correspondence with the edges or sides of the corresponding support frame and duly separated in accordance with the dimensions of the pallet, both in a transversal and a longitudinal direction, in order to obtain a correct haulage, the roller bearings being assembled on corresponding shafts, which may all be motorised, or only those corresponding to a side of the transport line, for which purpose either the shafts of a set of roller bearings or the shafts of the two sets, shall be provided with sprockets through which they receive the movement of a common chain.

In accordance with a further characteristic of the invention, the drive roller bearings are assembled on their corresponding shafts with a limiting torque system, thereby obtaining a clutch effect, such that the roller bearings are driven by the shafts to a specific torque, same being thrown out of gear when such torque is exceeded and, while the shafts continue to rotate, the roller bearings remain static, which obviously takes place when an abutment or any other element checks the forward movement of a pallet, in order to perform thereon the necessary operations inherent to a specific work station.

More specifically, this clutch effect is obtained because of a series of lips provided in the central area of each drive roller bearing, such lips being adapted to the shaft and pushed thereagainst by means of resilient rings, which clamp the lips of the roller bearing against the shaft to a greater or lesser extent and which, consequently, allow the drive torque suitable for each case to be established or regulated at will.

It is therefore possible for the driving "platform" for the pallets obtained in accordance with the object of the invention not only to constitute a continuous surface, but also to be mostly open, thereby allowing any type or means to detain the pallets to be established on its own plane, and all manner of handlings to be performed thereon, at the same time as the roller bearings supporting a certain pallet stop when same is held, there being no friction between these elements while the other roller bearings continue to move and consequently the other pallets continue to be displaced.

In a different embodiment, each of the previously mentioned drive roller bearings, is comprised by a cylindrical wheel made of plastic material provided with a plurality of equally spaced grooves, made along its generator and wherein one of such grooves is a through groove.

This different embodiment allows the internal diameter of the wheels to be uniformly adapted to the rotation shaft with a suitable drive torque, when pressed by a cap made of abrasion resistent resilient material and which is moreover more efficient to drive the pallet because of its own nature.

The said cap of resilient material constitutes a flexible enveloping element, which will cause all the roller bearings to uniformly contact against the pallet, although the shafts may not be perfectly in line. Similarly, the clamping torque is always constant and the drive of the pallet consequently improves, for there is a greater adhesion, due to the nature of the material, between the enveloping cap and the pallet itself.

It should finally be said that in this different embodiment of the roller bearing, assembly will be quicker and easier.

## DESCRIPTION OF THE DRAWINGS

In order to complement the description being made and to assist the better understanding of the characteristics of the invention, a set of drawings is attached to the present specification wherein, in an illustrative and non-limiting manner, the following have been shown:

Figure 1 is a diagrammatic plan view of a free flow drive system for pallets in accordance with the object of the present invention.

Figure 2 is a side elevation view of the same assembly.

Figure 3 is a cross section.

Figure 4 is finally an enlarged sectional level detail of one of the driving or haulage roller bearings, wherein the clutch means established between the roller bearing itself and its corresponding shaft may be observed in detail.

Figure 5 is a longitudinal sectional view of the roller bearing made in accordance with the improved different embodiment thereof.

Figure 6 is an end view of the roller bearing shown in the previous figures, without an enveloping resilient cap.

Figure 7 is finally a sectional view of the same roller bearing shown in figure 5 but assembled on the coresponding shaft of the drive system, on which shaft the respective sprocket is set as an integral part thereof.

## PREFERRED EMBODIMENT OF THE INVENTION

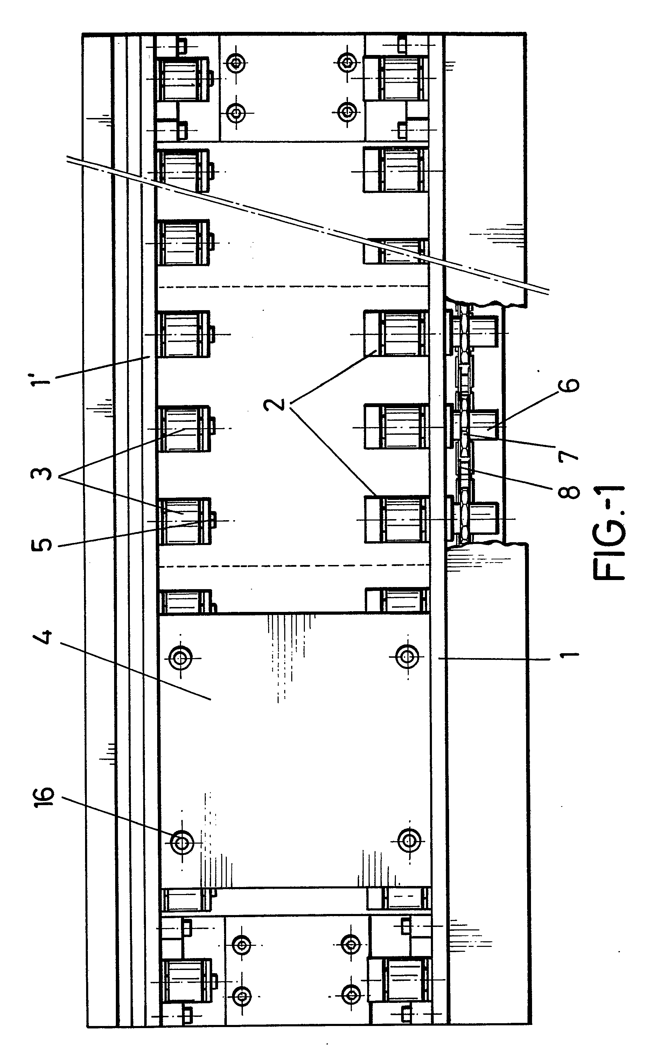

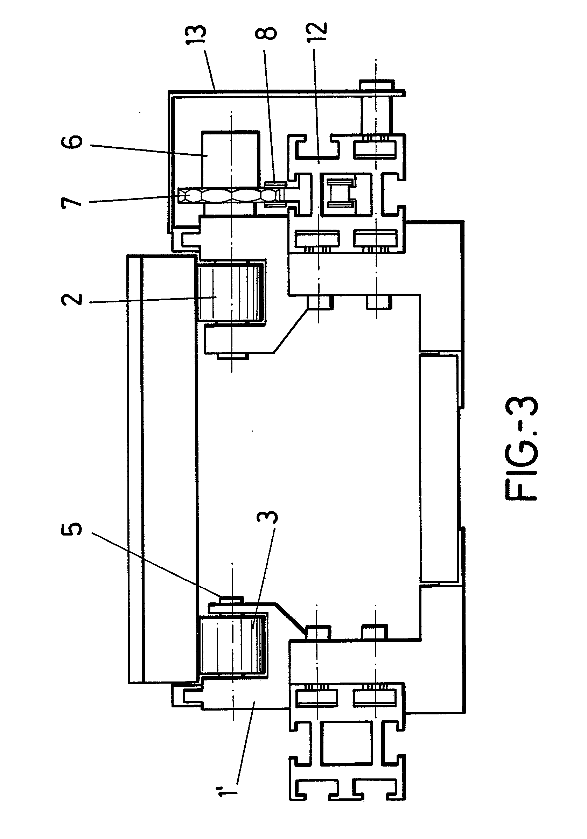

In the light of figures 1 through 4 inclusive it may be observed that the drive system of the present invention and from the corresponding support bed 1, comprises a plurality of roller bearings with a small axial counter, which form two groups related to the corresponding sides 1-1' of the bed and in the present case one of such groups, number 2, is comprised by drive roller bearings, whereas those numbered 3 rotate freely about their corresponding axes, although the two groups may be comprised by drive roller bearings whenever deemed expedient.

The separation between set of roller bearings 2 and set of roller bearings 3 will vary in accordance with the width of the pallets 4, whereas the separation between the roller bearings of each of these groups shall be suitable for haulage of the palets 4 to be correct.

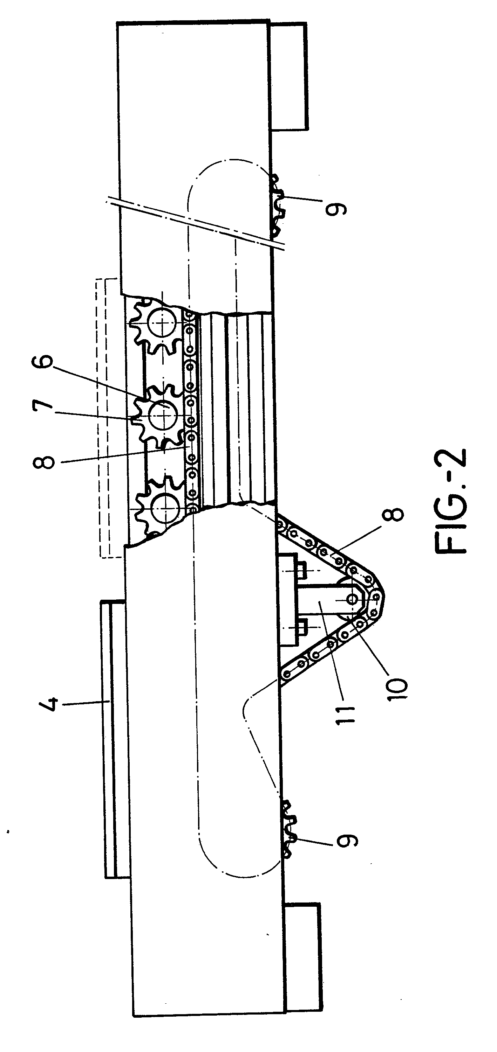

Roller bearings 3 are assembled with freedom of rotation about their corresponding shafts 5, whereas shafts 6 of the driver roller bearings 2 are provided with respective sprockets 7 which form an integral part thereof and through which all these shafts 6 and consequently all drive roller bearings 2 receive the movement with the help of a common chain 8 and from a suitable driving element, such as, for example, a battery switch group, which will be coupled to one of the end sprockets 9 on which chain 8 is assembled, which is furthermore provided with an adjuster sprocket 10 assembled on the corresponding adjuster arm 11, of any conventional type, such as the one shown in figure 2, such chain being provided with a guide profile 12 which in turn acts as a support profile for coupling of the control and codification means of the machine, the whole assembly being duly covered by protecting framework 13.

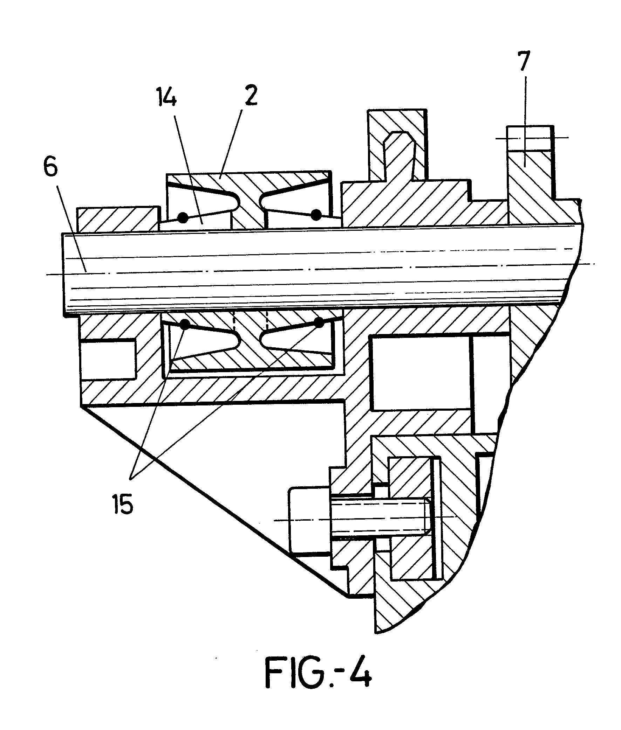

As may be specifically seen in the enlarged detail of figure 4, the central part of each drive roller bearing 2 is provided with a plurality of axial lips 14 through which it is adapted to shaft 6, such lips being provided with metal rings 15 which push them against shaft 6, such that the driving of each roller bearing 2 by the corresponding shaft 6 is performed through the friction of lips 14 against such shaft in accordance with the pressure generated by metal rings 15 and the weight of the loaded pallet, which causes the previously mentioned "clutch-type" coupling, thereby ensuring that transmission takes place up to a specific torque, and when same is exceeded, which will obviously happen when the forward movement of pallet 4 situated on such roller bearings is checked by any means, lips 14 begin to slide on shaft 6 and while such shaft continues to rotate movement, as do the other driver shafts of the drive system as a whole, roller bearings 2 on which the pallet rests shall remain static, without causing friction on the base of the latter, complementary roller bearings 3 also remaining static as they are assembled with freedom of rotation about their corresponding shafts 5.

From the structure described and especially by merely observing figure 1, which shows a plan view of the drive system, i.e., it is clear that the roller bearings stop when the forward movement of a pallet is checked, whereas the other pallets may carry on being displaced along the transport line, wide empty spaces being established in the latter, which affect most of it, and which allow the locking devices of the pallets to be placed thereunder, which devices shall, for example, act on holes 16 at the base of the latter, specifically in the practical embodiment shown in the drawings and being placed between adjacent roller bearings of the two side rows of roller bearings, at the same time as a broad central strip of the transport line is clear, in order to be able to operate on the pallets from below, with the mechanical devices required in accordance with the operation to be carried out, such as for example collar tools for pressing, introduction of ram elements, etc.

Figures 4 through 7 show a second preferred embodiment of the roller bearing which constitutes an essential part of the object of the invention, which roller bearing is in this case comprised by a cylindrical body 2' provided with the corresponding axial aperture 17 for assembly thereof on corresponding shaft 6. This roller bearing or cylindrical body 2' has a plurality of axial grooves 18 made in the direction of the generators, groove 18' being a through groove towards axial aperture 17.

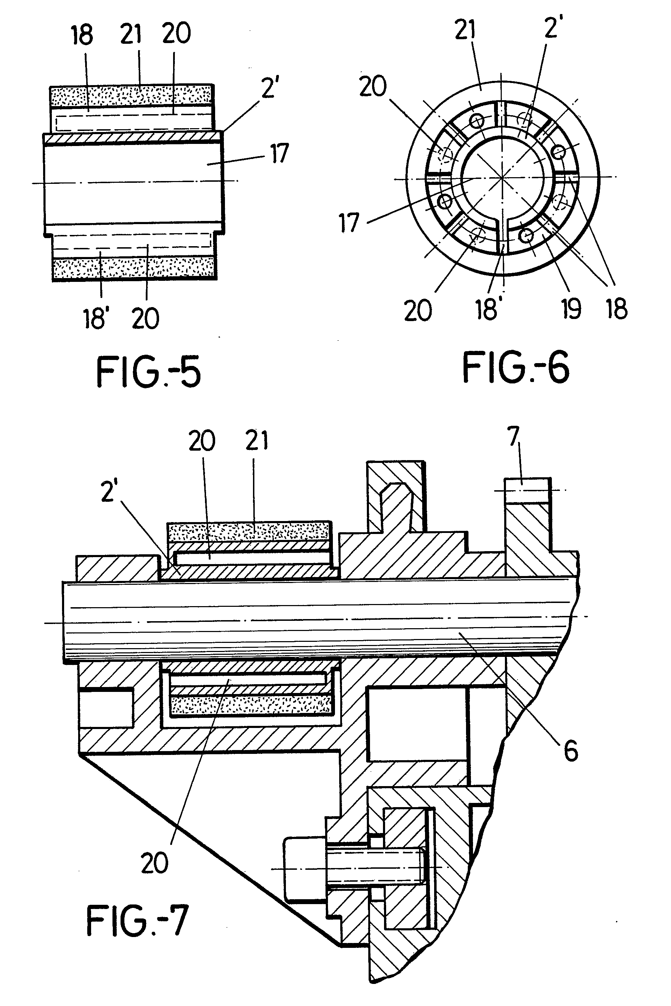

Between grooves 18 segments 19 are defined, each of which is provided with a blind hole 20, such that the opening of such aperture is made alternatively in such segments 19, as shown by the dash line of figure 5.

The roller bearing or cylindrical body 2' is complemented with an enveloping cap 21 made of resilient material, which cap presses on the former with a suitable clamping in order that the bond torque between cylindrical body 2' and the shaft 6 is that required for each case.

As a consequence of enveloping cap 21 being flexible, a uniform contact will take place of all roller bearings 2' against the pallet, although the shaft may not be perfectly in line.

Similarly, the clamping torque will always be constant and drive of the pallet will improve, since there will be a greater adhesion between enveloping cap 21 and the pallet itself, precisely because of the nature of the former.

## Claims

1.- Free flow drive system for pallets, especially applicable to assembly machines and the like, wherein the pallets must be able to move freely and individually, allowing same to be stored between two work stations, such that temporary stoppage at a work station will not cause the the whole installation to stop, essentially characterised in that it consists of two rows of roller bearings with a small axial counter, arranged in correspondence with the sides 1-1' of the bed which supports the drive system, such roller bearings 2 and 3 being duly separated in accordance with the dimensions of the pallets 4, it having been foreseen that at least one of these sets of roller bearings is motorised, whilst the other may also be motorised or the corresponding roller bearings 3 assembled with freedom of rotation on corresponding shafts 5, it having been foreseen that the motorized or drive roller bearings 2 are provided, forming an integral part of their shafts 6, with corresponding sprockets 7 through which they all simultaneously receive the movement of a common driving element, such as for example, a battery switch, and with the help of a transmission chain 8, all of this such that between the roller bearings of each row there are spaces which allow positioning of any suitable holding unitary means of the pallets 4, whereas between the two rows of roller bearings there is a wide and wholly clear space, in the transport line, which allows direct access to the pallets through the lower base thereof, for any handling thereon, it further having been foreseen that the drive roller bearings 2 are related with their corresponding shafts through clutch gears which, after exceeding a specific torque, when the forward movement of a pallet is checked, cause the shaft and the roller bearing to become uncoupled and consequently the latter to stop whilst the shaft continues to rotate, and consequently there is no friction between roller bearings and pallet when the latter is stopped.

2.- Free flow drive system for pallets, in accordance with claim 1, characterised in that the clutch gear of the drive roller bearings 2 with respect to their corresponding shafts 6 consists, for each roller bearing, in a plurality of lips 14 which project radially and in the two directions from its central area, are adapted to the shaft and are pushed against the latter by metal rings 15 which determine such lips to be clamped against the corresponding shaft at a specific driving torque, and after such torque is exceeded these elements are automatically thrown out of gear, with the particularity that the haulage torque may be regulated at will by regulating the clamp effect of the metal rings 15.

3.- Free flow drive system for pallets, in accordance with previous claims, essentially characterised in that drive roller bearings 2 are comprised by a cylindrical body 2' provided with a wide and through axial aperture 17 and with grooves 18 in the direction of their generators, such that groove 18' is open; with the particularity that respective segments 19 are defined between such grooves provided with a channel or an axial blind hole 20 the mouth whereof is alternatively made in one segment with respect to the adjacent segment; it further having been foreseen that the assembly is complemented with an enveloping cap 21 of resilient material destined to press cylindrical body 2' itself with a suitable clamping in order that the bond torque between the latter and corresponding assembly shaft 6 is that required for each case.

FIG-1

FIG.-2

EP 0 323 385 A1

FIG-3

FIG.-4

FIG.-5

FIG.-6

FIG.-7

## DOCUMENTS CONSIDERED TO BE RELEVANT

EP 88500128.9

| Category | Citation of document with indication, where appropriate, of relevant passages | Relevant to claim | CLASSIFICATION OF THE APPLICATION (Int. Cl.4) |
|---|---|---|---|
| X | EP - A2 - 0 051 867 (HASBACH)<br>* Fig. 2 * | 1 | B 65 G 13/06 |
| X | DE - B - 1 102 041 (RENAULT)<br>* Fig. 3 * | 1 | |
| P,X | EP - A1 - 0 264 254 (SONY)<br>* Fig. 1 * | 1 | |
| A | US - A - 4 479 572 (MERZ)<br>* Abstract * | 1 | |
| A | US - A - 4 193 493 (EKSTRAND)<br>* Fig. * | 2 | |

TECHNICAL FIELDS
SEARCHED (Int. Cl.4)

B 65 G

The present search report has been drawn up for all claims

| Place of search | Date of completion of the search | Examiner |
|---|---|---|
| VIENNA | 08-03-1989 | BAUMGARTNER |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

& : member of the same patent family, corresponding
    document

EPO Form 1503. 03.82